# EUROPÄISCHE PATENTSCHRIFT

(11) **EP 1 102 207 B1**
(45) Veröffentlichungstag und Bekanntmachung des Hinweises auf die Patenterteilung: **05.03.2008**
(21) Anmeldenummer: 00203622.6
(22) Anmeldetag: 18.10.2000
(51) Int. Cl.: G06K 19/077, G06K 7/08

(54) **Etikettenanordnung**
Label device
Dispositif d'étiquette

(30) Priorität: 26.10.1999 DE 19951378
(43) Veröffentlichungstag der Anmeldung: 23.05.2001
(73) Patentinhaber: NXP B.V., 5656 AG Eindhoven (NL)
(72) Erfinder: Giesler, Thomas, Dr., Philips Corporate, 52084 Aachen (DE)

(56) Entgegenhaltungen:
- WO-A-97/14112
- US-A- 4 835 373
- US-A- 4 876 535
- US-A- 5 847 447

## Beschreibung

Die Erfindung bezieht sich auf ein System mit einer Etikettenanordnung gemäß dem Oberbegriff des unabhängigen Anspruchs.

Aus der WO 97/14112 A1 ist eine tragbare Nachrichtenübertragungseinrichtung bekannt, die ein erstes elektrostatisches Antennenelement und ein zweites elektrostatisches Antennenelement sowie eine Schaltungsanordnung aufweist, die mit dem ersten Antennenelement und dem zweiten Antennenelement gekoppelt ist und die Versorgungsenergie aus einem elektrostatischen Feld in der Nachbarschaft des ersten und des zweiten Antennenelements gewinnt.

Aus der DE 196 28 504 A1 ist eine Etikettenvorrichtung mit einer kapazitiv an eine Antenne gekoppelten integrierten Schaltung sowie ein Verfahren zu ihrer Herstellung bekannt. Die Etikettenvorrichtung weist eine integrierte Schaltung, in der integrierten Schaltung enthaltene Elektrodenplatten, einen elektrisch isolierenden Film, der die Elektrodenplatten bedeckt, Antennenanschlüsse, die jeweils einer der Elektrodenplatten gegenüber liegen, mit dem isolierenden Film dazwischen, Antennen, die jeweils mit einem der Antennenanschlüsse verbunden sind, und Hüllteile auf. Die bekannte Etikettenvorrichtung speichert Informationen, beispielsweise in bezug auf die Art und den Preis eines Handelsartikels, und sendet als Antwort auf von einer Abfrageeinrichtung empfangene elektromagnetische Wellen ein auf den Informationen basierendes Signal.

Aus der in der DE 196 28 504 A1 zitierten EP 0 585 132 A1 ist ein Transponder, der mit Antennen elektromagnetische Wellen von einer Abfrageeinrichtung empfängt, bekannt. Der Empfang der elektromagnetischen Wellen bringt eine Antwortschaltung des Transponders dazu, als Antwort auf die empfangenen Wellen Informationen auszugeben und die Informationen über die Antennen an die Abfrageeinrichtung zu senden. Die Stromversorgung der Antwortschaltung erfolgt mittels der Leistung der empfangenen elektromagnetischen Wellen. Wenn der Transponder die elektromagnetischen Wellen von der Abfrageeinrichtung mit seinen Antennen empfängt, formt eine Stromversorgungsschaltung die Leistung der empfangenen Wellen in Gleichstromleistung um und führt sie der Antwortschaltung zu, wodurch diese eingeschaltet wird. Die Antwortschaltung demoduliert ein von der Abfrageeinrichtung empfangenes Signal, analysiert es und gibt dann in der Antwortschaltung gespeicherte Informationen aus. Das Ausgangssignal der Antwortschaltung wird über einen Kopplungskondensator an die Antennen geleitet. Als Folge werden die Informationen über die Antennen an die Abfrageeinrichtung übertragen.

Die Antwortschaltung und die Stromversorgungsschaltung gemäß der EP 0 585 132 A1 sind auf einem Halbleiterchip in Form einer allgemein flachen integrierten Schaltung gebildet. Die integrierte Schaltung ist mittels Drähten mit den Antennen verbunden. Jede der Antennen hat ebenfalls eine allgemein flache Gestalt und erstreckt sich in einer Ebene nach außen, die die flache integrierte Schaltung enthält. Die gesamte integrierte Schaltung einschließlich der Antennen ist mit ihren einander entgegengesetzten Hauptflächen zwischen zwei Hüllteile gelegt und wird dadurch dicht gekapselt. Die Hüllteile sind jeweils aus Kunststoff gebildet und weisen ebenfalls eine flache Gestalt auf. Der resultierende Aufbau bildet eine Etikettenvorrichtung, die z.B. an einem Handelsartikel angebracht werden kann, um Informationen an eine Abfrageeinrichtung zu senden.

Bei der aus der EP 0 585 132 A1 bekannten Etikettenvorrichtung sind die Drähte und die Antennen bzw. die Drähte und die Anschlüsse der integrierten Schaltung durch Drahtkontaktierungen verbunden. Diese sind anfällig gegen Verbindungsdefekte infolge von Schlägen oder Stößen und bedürfen hoher Präzision bei der Fertigung.

Bei der Etikettenvorrichtung gemäß DE 196 28 504 A1 sind diese Drahtkontaktierungen dadurch ersetzt, daß bei der dort beschriebenen Etikettenvorrichtung eine Antenne vorgesehen ist, auf einer Hauptfläche der in der Etikettenvorrichtung vorhandenen integrieren Schaltung eine allgemein flache Elektrodenplatte angeordnet und mit der Antwortschaltung der Etikettenvorrichtung verbunden ist. Ein allgemein flacher Antennenanschluß ist mit der Antenne verbunden und liegt der Elektrodenplatte in einem vorgewählten Abstand gegenüber. Zwischen dem Antennenanschluß und der gegenüberliegenden Elektrodenplatte ist eine Kapazität gebildet, durch die die Antennen an die integrierte Schaltung elektrisch gekoppelt sind.

Die Erfindung hat die Aufgabe, eine weiter vereinfachte und verbilligte Etikettenanordnung zu schaffen.
Diese Aufgabe wird gelöst durch ein System mit einer Etikettenanordnung zum Empfangen, Verarbeiten und/oder Senden von Datensignalen mit einer auf einem im wesentlichen flächigen Substratkörper ausgebildeten, integrierten elektronischen Datenverarbeitungsschaltung und wenigstens zwei auf dem flächigen Substratkörper der Etikettenanordnung angeordneten Elektroden sowie mit einem Lesegerät mit zu den Elektroden der Etikettenanordnung korrespondierenden Elektroden, wobei im Betrieb die Etikettenanordnung derart in räumliche Korrelation mit dem Lesegerät gebracht wird, daß zwischen den Elektroden der Etikettenanordnung und den korrespondierenden Elektroden des Lesegeräts durch über eine kapazitive Kopplung mit einem quasi statischen, elektrischen Wechselfeld hervorgerufene Verschiebungsströme ein Austausch von elektrischer Versorgungsenergie und/oder der Datensignale vorgenommen wird, welches System gemäß den kennzeichnenden Merkmalen des unabhängigen Anspruchs ausgebildet ist.
In dem erfindungsgemäßen System mit einer Etikettenanordnung der beschriebenen Art und einem Lesegerät sind das Lesegerät und die Etikettenanordnung mit zueinander komplementären, formschlüssigen Ausformungen ausgestaltet. Diese dienen dem lagegenauen, schnellen Zusammenführen von Lesegerät und Etikettenanordnung. Derartige Ausformungen erweisen sich als vorteilhaft, um für die zu erreichende Kopplung zwischen dem Lesegerät und der Etikettenanordnung die aufgrund der geringen Abmessungen der erfindungsgemäßen Etikettenanordnung erforderliche hohe Positionierungsgenauigkeit einfach erreichen zu können. Dadurch wird der Datenaustausch schnell und zuverlässig ermöglicht.

Die Etikettenanordnung für das erfindungsgemäße System kann vollständig auf einem einstückigen Substratkörper ohne zusätzliche, externe Bauteile angeordnet werden. Als ein derartiger Substratkörper kann ein Halbleiterkörper dienen, auf dem bzw. in dem zugleich die Datenverarbeitungsschaltung ausgebildet ist. Für den Halbleiterkörper können herkömmliche Halbleitermaterialien, wie Silizium oder halbleitende Verbindungen, jedoch auch halbleitende Kunststoffe eingesetzt werden. Die Etikettenanordnung für das erfindungsgemäße System tritt über die auf dem Substratkörper unmittelbar angeordneten Elektroden, die auch durch Teile des Substratkörpers selbst gebildet sein können, unmittelbar in Austausch von elektrischer Versorgungsenergie und/oder der Datensignale mit korrespondierenden Elektroden eines an die Etikettenanordnung angepaßten Lesegerätes. Die für diese Austausch erforderliche Kopplung erfolgt auf kapazitivem Wege, d.h. durch ein quasi statisches, elektrisches Feld, auf sehr dichte Entfernungen. Durch die Vermeidung von Mikrowellen zur Übertragung werden Streufelder minimiert und damit die Übertragungs- bzw. Abhörsicherheit erhöht. Neben der vereinfachten Gestaltung der Etikettenanordnung für das erfindungsgemäße System und des zugehörigen Lesegerätes wird außerdem eine universelle Verwendbarkeit auch für sicherheitsempfindliche Anwendungsbereiche erzielt. So lassen sich die Etikettenanordnung für das erfindungsgemäße System als maschinenlesbare und wieder beschreibbare Produktetiketten zum Speichern von Produktinformationen und Kundendienstdaten einsetzen. Sie können ferner in Etiketten bzw. Aufklebern für biochemische Probenbehälter, Akkumulatorenpakete, Datenspeichermedien und dergleichen Verwendung finden.Etikettenanordnung für das erfindungsgemäße System können als Sicherheitskennzeichnungen beispielsweise für Reisepässe, Führerscheine oder Banknoten als Fälschungsschutz oder auch dafür eingesetzt werden, diese Dokumente maschinenlesbar zu machen. Durch ihre sehr kompakte Bauform und sehr geringen Abmessungen können die Etikettenanordnung für das erfindungsgemäße System beispielsweise auch als Echtheitsmarkierung für Produkte und Kunstwerke dienen. Sie lassen sich ferner als versteckte, geheime Begleitetiketten an verschiedenen Stellen von Fahrzeugen unterbringen, wie Automobilen und Fahrrädern, und dienen dort beispielsweise als Erkennungsmerkmale zum Wiederauffinden von Diebesgut. Etikettenanordnung für das erfindungsgemäße System können auch als billige elektronische Fahrscheine mit hohem Schutz gegen Fälschungen verwendet werden.

Durch ihre einfache Bauform sind die Etikettenanordnung für das erfindungsgemä-ße System sehr preiswert herstellbar. Vorzugsweise ist die integrierte Datenverarbeitungsschaltung durch einen standardisierten CMOS-Herstellungsprozeß gefertigt, wobei auf dem Substratkörper die Einrichtungen, insbesondere Elektroden und zugehörige Schaltungsanordnungen, ohne zusätzliche, externe Bauteile mit umfaßt sind. Insbesondere ist kein eigener Energiespeicher zur Speicherung von Versorgungsenergie erforderlich. Energie- und Datenaustausch erfolgen alleindurchkapazitive Kopplung. Vorzugsweise kann bei einer solchen Etikettenanordnung der Substratkörper bei Fertigung auf Siliziumbasis eine Fläche von etwa 1 qmm oder weniger aufweisen. Da für die Etikettenanordnung für das erfindungsgemäße System weder Anschlußkontaktierungen noch besondere Gehäuse erforderlich sind, sind die Fertigungskosten sehr niedrig, insbesondere betragen sie nur etwa 1/10 der Fertigungskosten für Mikrowellen gekoppelte Etikettenvorrichtungen.

Bei der Etikettenanordnung für das erfindungsgemäße System können wahlweise wenigstens zwei der Elektroden auf derjenigen Fläche des Substratkörpers angeordnet sein, auf der die Datenverarbeitungsschaltung ausgebildet ist, oder es kann wenigstens eine der Elektroden dort und wenigstens eine weitere auf einer gegenüber befindlichen Fläche des Substratkörpers angeordnet sein. Vorzugsweise dient als diese weitere Elektrode auf der der Datenverarbeitungsschaltung gegenüber befindlichen Fläche des Substratkörpers das Material des Substratkörpers selbst. Durch diese Variationsmöglichkeiten sind einfache Anpassungen an die jeweils gewünschten Anwendungsfälle möglich.

Neben der unmittelbaren kapazitiven Kopplung zwischen den Elektroden der Etikettenanordnung für das erfindungsgemäße System und den Elektroden des Lesegeräts ist bei den Etikettenanordnung für das erfindungsgemäße System auch in einfacher Weise eine indirekte kapazitive Kopplung über wenigstens eine Hilfselektrode möglich. Dazu weist eine Etikettenanordnung zusätzlich einen wenigstens eine zumindest im wesentlichen flächige Hilfselektrode enthaltenden Trägerkörper auf. Auf diesem Trägerkörper ist der Substratkörper mit den Elektroden und der Datenverarbeitungsschaltung in einer Position angeordnet, in der eine kapazitive Kopplung von jeder Hilfselektrode an je wenigstens nahezu ausschließlich eine der Elektroden auf dem Substratkörper bewirkt ist. Ohne dabei das Prinzip der kapazitiven Kopplung aufzugeben, kann mit einer solchen Anordnung eine hinreichend intensive elektrostatische Kopplung auch dann erzielt werden, wenn aus Gründen der Handhabung die Elektroden des Lesegerätes und der Etikettenanordnung nicht nahe genug einander angenähert werden können, um zwischen dem Lesegerät und unmittelbar den Elektroden auf dem Substratkörper eine ausreichende kapazitive Kopplung zu erzielen. Die Hilfselektroden werden bei einer solchen Anordnung sehr nahe an die Elektroden auf dem Substratkörper gebracht, so daß hier eine hinreichend hohe Kapazität entsteht. Eine entsprechend ausreichende Kapazität ist dann zwischen den Elektroden des Lesegeräts und den Hilfselektroden zu bilden, wobei eine gemäß dem einzuhaltenden Abstand dimensionierte flächige Ausdehnung der Hilfselektroden gewählt werden muß. Die Kapazität zwischen der jeweiligen Elektrode auf dem Substratkörper und der Hilfselektrode einerseits sowie die Kapazität zwischen der Hilfselektrode und der Elektrode des Lesegeräts andererseits sind im Betrieb dann in Reihe geschaltet und bewirken eine kapazitive Kopplung zwischen dem Substratkörper und dem Lesegerät. Dazu ist bevorzugt jede Hilfselektrode den Substratkörper wenigstens weitgehend im Bereich der mit ihr kapazitiv koppelnden Elektrode auf dem Substratkörper überdeckend angeordnet.

In einer anderen Ausgestaltung, in der wenigstens eine der Elektroden der Etikettenanordnung auf der der Datenverarbeitungsschaltung auf dem Substratkörper gegenüber befindlichen Fläche angeordnet ist, ist der Substratkörper mit den darauf angeordneten Elektroden und der Datenverarbeitungsschaltung zwischen in zwei Ebenen angeordneten Hilfselektroden angeordnet. Dadurch ist eine einfache Kopplung der Hilfselektroden mit den Elektroden auf dem derart konfigurierten Substratkörper möglich.

Weitere vorteilhafte Ausgestaltungen der Erfindung ergeben sich aus den weiteren Unteransprüchen.

Vorteilhafte Ausführungsbeispiele sind in der Zeichnung dargestellt und werden im nachfolgenden näher beschrieben. Es zeigen
Fig. 1 verschiedene Beispiele für die Ausgestaltung einer Etikettenanordnung,
Fig. 2a ein erstes Beispiel für das Zusammenwirken einer Etikettenanordnung mit einem Lesegerät,
Fig. 2b ein zweites, erfindungsgemäßes Beispiel für das Zusammenwirken einer Etikettenanordnung für das erfindungsgemäße System mit einem Lesegerät,
Fig. 3 eine Ausführung einer Etikettenanordnung mit einem Trägerelement mit Hilfselektroden und deren Zusammenwirken mit einem Lesegerät,
Fig. 4 Beispiele für das Zusammenwirken von Lesegerät und Etikettenanordnung bei zweiseitiger Anordnung von Elektroden auf der Etikettenanordnung,
Fig. 5 ein Beispiel einer Anordnung einer Hilfselektrode gegenüber der der Datenverarbeitungsschaltung auf dem Substratkörper abgewandten Fläche desselben,
Fig. 6 einige Beispiele für das Zusammenwirken zwischen Etikettenanordnung und Lesegerät bei auf der Etikettenanordnung beidseitig angeordneten Elektroden unter Einbeziehung von Hilfselektroden,
Fig. 7 eine blockschematische Darstellung der elektrischen Schaltung eines Lesegerätes und einer Etikettenanordnung in einem ersten Beispiel und
Fig. 8 eine Abwandlung der Schaltungsanordnung nach Fig. 7.

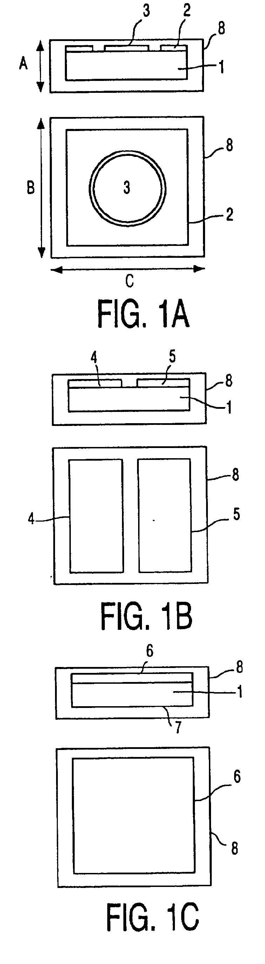

Die Fig. 1 a), b) und c) zeigen je eine Etikettenanordnung mit einem im wesentlichen flächigen Substratkörper 1 und darauf angeordneten Elektroden 2, 3, 4, 5, 6, 7. Jede der Fig. 1a), b) bzw. c) zeigt im oberen Teil einen Querschnitt durch bzw. im unteren Teil eine Draufsicht auf die Etikettenanordnung nach dem dargestellten Beispiel. In jeder der dargestellten Etikettenanordnungen ist im Substratkörper 1 unmittelbar unterhalb der Elektroden 2, 3 bzw. 4, 5 bzw. 6 eine Datenverarbeitungsschaltung ausgebildet, vorzugsweise in CMOS-Technik integriert. Bevorzugt ist der Substratkörper 1 dabei aus dotiertem Silizium geformt. In einer Variation kann er jedoch auch aus halbleitendem Kunststoff gefertigt sein.

Die auf der Oberseite des Substratkörpers 1 unmittelbar über der Datenverarbeitungsschaltung aufgebrachten Elektroden 2, 3 bzw. 4, 5 bzw. 6 sind mit dieser entsprechend elektrisch leitend verbunden und weisen unterschiedliche, geometrische Formen auf. So umfaßt die Etikettenanordnung nach Fig. 1a) zwei konzentrische Elektroden 2, 3, die Etikettenanordnung nach Fig.1b) zwei streifenförmig nebeneinander angeordnete Elektroden 4, 5. Die Etikettenanordnung nach Fig. 1c) weist auf der Oberseite eine einzige, durchgehende Elektrode 6 auf. Hier bildet der Substratkörper 1 auf seiner Unterseite eine zweite Elektrode 7.

Die Substratkörper der in Fig. 1 beispielhaft dargestellten Etikettenanordnungen einschließlich ihrer Elektroden sind mit einem Schutzüberzug 8 aus Kunststoffumschlossen (sogenanntes "Coating"). Dadurch werden elektrische Kurzschlüsse und Korrosion verhindert. In Fig. 1a) sind beispielhaft außerdem die Hauptabmessungen der Etikettenanordnung wiedergegeben. Beispielhaft beträgt bei einer erfindungsgemäßen Etikettenanordnung die Dicke A weniger als 100 µm, wohingegen die Breite B und die Länge C kleiner als 1 mm sein können. Eine derartig miniaturisierte Bauform ermöglicht einen freizügigen Einsatz der erfindungsgemäßen Etikettenanordnung.

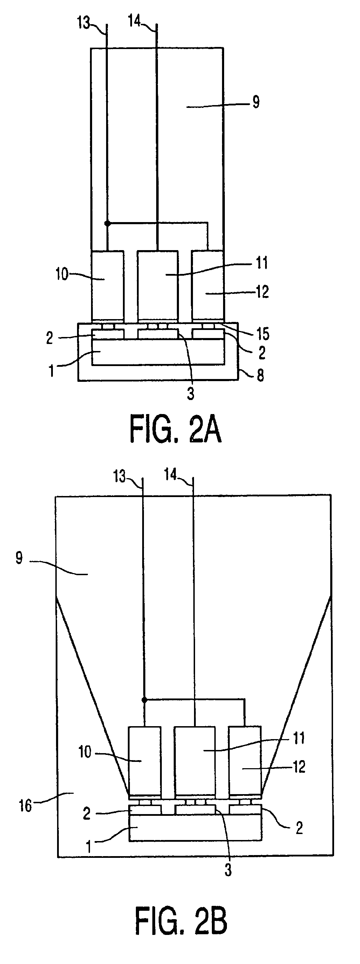

Fig. 2 zeigt zwei Beispiele für das Zusammenwirken zwischen einer Etikettenanordnung und einem zugehörigen Lesegerät. Dieses umfaßt eine als Lesestift 9 bezeichnete Anordnung, in der Elektroden 10, 11, 12 in einem Isolierstoff eingeformt sind. Dieser Isolierstoff weist bevorzugt eine bleistiftähnliche Gestalt auf, deren Spitze der Oberfläche des Substratkörpers 1 der Etikettenanordnung angepaßt ist und die genannten Elektroden 10 bis 12 trägt. Zum Betrieb der Etikettenanordnung mit dem Lesegerät wird der Lesestift 9 mit seiner Spitze und den darin enthaltenen Elektroden 10, 11, 12 auf der Oberfläche der Etikettenanordnung derart aufgesetzt, daß die Elektroden 10 bis 12 des Lesegeräts den Elektroden der Etikettenanordnung, zu denen eine kapazitive Kopplung aufgebaut werden soll, wenigstens weitgehend deckungsgleich gegenüber stehen. Im Beispiel nach Fig. 2 ist dies anhand der Etikettenanordnung gemäß Fig. 1a) mit den konzentrischen Elektroden 2, 3 dargestellt. Entsprechend sind die äußeren Elektroden 10, 12 im Lesestift 9 elektrisch miteinander verbunden. Zwei Elektrodenanschlüsse 13, 14 sind mit den Elektroden 10, 12 bzw. 11 verbunden und führen zu weiteren, elektronischen Elementen zur Signalverarbeitung im Lesegerät. Mit dem Bezugszeichen 15 sind in Fig. 2a) schematisch die elektrischen Feldlinien angedeutet.

Um eine genaue Lageausrichtung zwischen der Etikettenanordnung und dem Lesestift 9 ohne aufwendige Justierarbeiten erreichen zu können, weist im Ausführungsbeispiel der Erfindung nach Fig. 2b) der Lesestift 9 im Bereich der Elektroden 10 bis 12 eine konische Ausformung auf, die formschlüssig in eine entsprechende Ausformung eines Gehäuses 16 der Etikettenanordnung greift. Durch diese Ausformung ist ein schnelles paßgenaues Zusammenführen des Lesestiftes 9 mit der Etikettenanordnung und damit eine funktionsgenaue Justierung der Elektroden 10 bis 12 mit den Elektroden 2, 3 möglich. Das Gehäuse 16 übernimmt in der Ausführung nach Fig. 2b) auch die Funktion des Schutzüberzuges 8 der Etikettenanordnung.

Vorzugsweise sind die Elektroden 10 bis 12 aus leitendem Polymer gefertigt. Diese elastische Ausbildung vermindert den Einfluß von Schmutzpartikeln auf der Oberfläche der Etikettenanordnung. Einerseits wird dabei ein punktförmiger Druck des Lesestiftes 9 auf die Etikettenanordnung vermieden, andererseits kann auch beim Vorhandensein von Schmutzpartikeln der Abstand zwischen den Elektroden 10 bis 12 einerseits und 2, 3 andererseits für eine sichere Funktion eingehalten werden, da das elastische Polymer im Bereich des Schmutzpartikels nachgibt, im übrigen jedoch weiterhin auf der Oberfläche der Etikettenanordnung aufliegt.

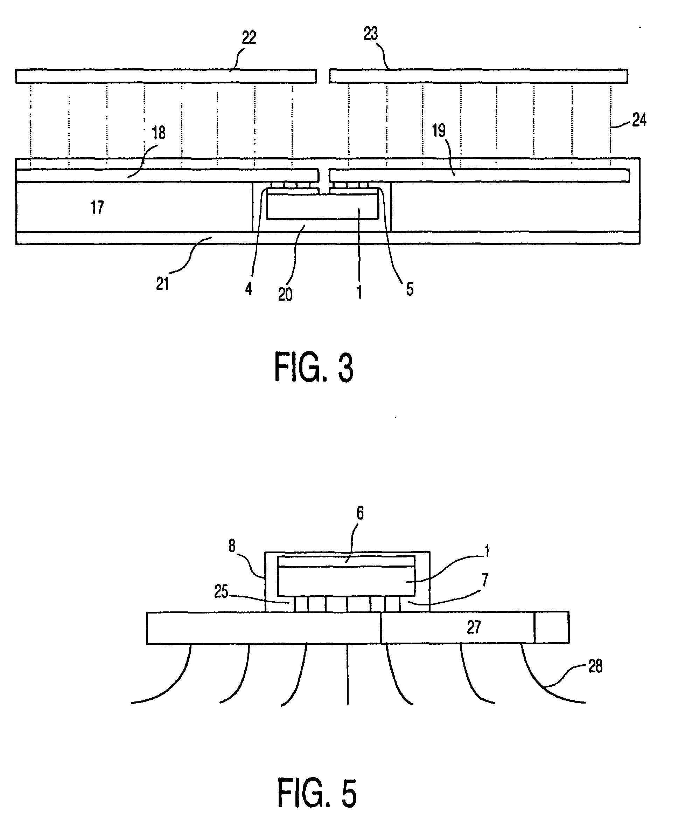

Fig. 3 zeigt am Beispiel der Etikettenanordnung nach Fig. 1b) die Ausbildung mit einem Trägerkörper 17, in dem zwei Hilfselektroden 18, 19 eingebettet sind. Der Trägerkörper 17 ist aus folienartigem, isolierendem Material hergestellt, die Hilfselektroden 18, 19 weisen eine flächige Gestalt auf: In eine Ausnehmung des Trägerkörpers 17 ist der Substratkörper 1 mit den Elektroden 4, 5 eingebettet, die Ausnehmung des Trägerkörpers 17 ist mit einer Klebemasse 20 gefüllt, in die der Substratkörper 1 eingebettet ist. Diese Klebemasse 20 bildet gleichzeitig ein Dielektrikum, welches zwischen den Elektroden 4, 5 auf dem Substratkörper 1 und den Hilfselektroden 18 bzw. 19 eine dünne, dielektrische Schicht bildet. Dadurch wird zwischen den Elektroden 4, 5 und den Hilfselektroden 18 bzw. 19 je eine Kapazität gebildet, durch die Versorgungsenergie und/oder Datensignale zwischen den Hilfselektroden 18 bzw. 19 und der Datenverarbeitungsschaltung auf dem Substratkörper 1 übertragen werden können. Vorzugsweise sind die Hilfselektroden 18, 19 im Bereich der Überdeckung des Substratkörpers 1 derart ausgebildet, daß sie dort mit den Elektroden 4 bzw. 5 deckungsgleich sind. Die den Hilfselektroden 18, 19 abgewandte flächige Seite des Trägerkörpers 17 ist im Beispiel nach Fig. 3 mit einer selbstklebenden Schicht 21 überzogen. Mit Hilfe dieser selbstklebenden Schicht 21 läßt sich die Etikettenanordnung sehr einfach und schnell befestigen.

Durch die vergrößerte Oberfläche der Hilfselektroden 18, 19 ist es möglich, zum Lesegerät über das elektrische Feld auch in einem vergrößerten Abstand eine Kopplung herzustellen. Entsprechende Elektroden 22, 23 des Lesegerätes sind in Fig. 3 schematisch dargestellt; zwischen diesen Elektroden 22 bzw. 23 und den Hilfselektroden 18 bzw. 19 bildet sich das mit den Feldlinien 24 angedeutete elektrische Feld aus. In einer Abwandlung der Anordnung nach Fig. 3 können die Elektroden 22, 23 des Lesegerätes auch konzentrisch ausgebildet sein. Entsprechend konzentrisch sind dann auch die Hilfselektroden 18, 19 geformt. Beispielsweise weist die Oberfläche der Hilfselektrode 18 eine kreisscheibenförmige Gestalt auf, an deren Rand der Substratkörper 1 plaziert ist. Dabei überdeckt die Hilfselektrode 18 mit ihrem Rand die Elektrode 4 auf dem Substratkörper, während die zweite Elektrode 5 auf dem Substratkörper unter dem Rand der Hilfselektrode 18 hervorragt. Konzentrisch um die erste Hilfselektrode 18 ist die zweite Hilfselektrode 19 in Form eines Kreisringes angeordnet, der mit seiner inneren Berandung die Elektrode 5 auf dem Substratkörper 1 überdeckt.

Durch einfaches Kleben des Substratkörpers 1 unter den folienartigen Trägerkörper 17 mit den Hilfselektroden 18, 19 kann bei der Herstellung auch ein Laminieren des Substratkörpers 1 in den Trägerkörper 17 eingespart und somit eine preiswerte Herstellungsweise erzielt werden.

Mit einer derartigen Etikettenanordnung können zwischen dieser und demLesegerät im Betrieb Entfernungen von einigen cm überbrückt werden.

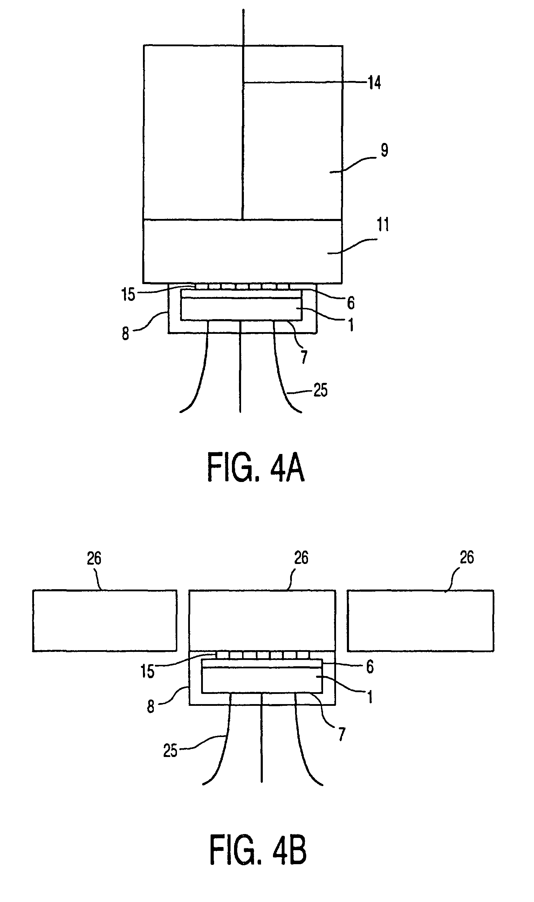

Fig. 4 zeigt zwei Ausführungsformen für das Zusammenwirken zwischen einer Etikettenanordnung mit einer Elektrode 7 auf der rückwärtigen, d.h. von der Datenverarbeitungsschaltung im Substratkörper 1 abgewandten Fläche desselben. Im Lesestift 9 ist hier nur eine Elektrode 11 mit einem Elektrodenanschluß 14 untergebracht, der über das elektrische Feld 15 mit der Elektrode 6 auf der Oberseite des Substratkörpers 1, entlang der die Datenverarbeitungsschaltung angeordnet ist, koppelt. Der Stromkreis für die Kopplung schließt sich über ein durch elektrische Feldlinien 25 angedeutetes elektrisches Feld zwischen der Elektrode 7 auf der Rückseite des Substratkörpers 1 und dem die gesamte Anordnung umgebenden Massepotential, an das auch das Lesegerät angeschlossen ist. Die Elektrode 11 ist wiederum vorzugsweise aus leitendem Polymer hergestellt.

In der Abwandlung nach Fig. 4b) umfaßt das Lesegerät eine Elektrodenmatrix aus mehreren Elektroden 26, die ebenfalls alle aus leitendem Polymer hergestellt sind. Durch eine solche Elektrodenmatrix kann das Problem des Justierens des Lesestiftes 9 gegenüber der Etikettenanordnung auf elektronischem Wege gelöst werden. Die Elektrodenmatrix weist hinreichend große Abmessungen auf, so daß eine Plazierung der Etikettenanordnung gegenüber der Elektrodenmatrix bzw. umgekehrt ohne große Schwierigkeiten durch einen Benutzer erfolgen kann. Durch eine Detektionsschaltung kann nun für jede Elektrode 26 nacheinander mit Hilfe eines elektrischen Meßfeldes ermittelt werden, ob eine Kopplung zu der Elektrode 6 auf der Oberseite des Substratkörpers 1 der Etikettenanordnung vorliegt. Die Elektrode 26 mit der maximalen Kopplung wird dann für die Übertragung der Datensignale bzw. der Versorgungsenergie ausgewählt.

In entsprechender Weise kann eine elektronische Justierung auch für eine Etikettenanordnung erfolgen, die wenigstens zwei Elektroden auf der Oberseite des Substratkörpers 1 trägt, beispielsweise einer Etikettenanordnung nach den Fig. 1a) oder 1b).

Fig. 5 zeigt die Anbringung einer Etikettenanordnung gemäß demAusführungsbeispiel nach Fig. 1c) auf der Oberfläche eines leitenden Körpers 27, beispielsweise auf einem metallischen Gegenstand. Durch das elektrische Feld 25 wird dann eine enge kapazitive Kopplung zwischen der Elektrode 7 auf der Rückseite des Substratkörpers 1 und dem leitenden Körper 27 hergestellt. Der leitende Körper 27 übernimmt somit die Funktion einer Hilfselektrode für die Elektrode 7. Der Schutzüberzug 8 bildet das Dieleketrikum zwischen dem leitenden Körper 27 und der Elektrode 7. Über ein Feld 28 koppelt der leitende Körper 27 mit Masse. Der leitende Körper 27 wirkt somit in zu den Hilfselektroden 18 bzw. 19 entsprechender Weise als Vergrößerung der Koppelkapazität.

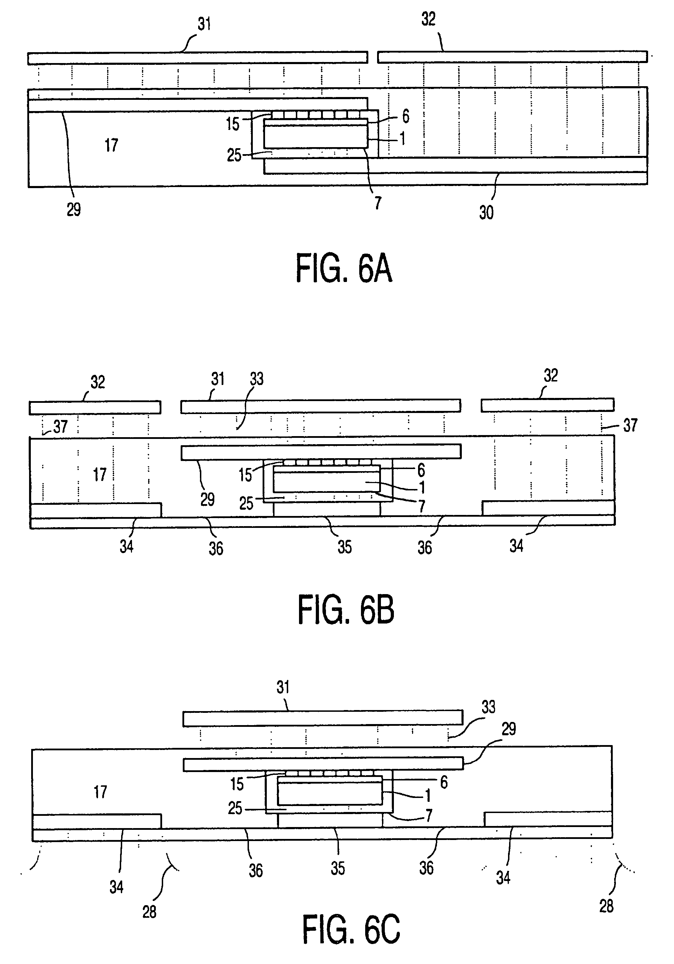

Fig. 6 zeigt einige Ausführungsformen, bei der ein Substratkörper 1 mit einer oberseitigen Elektrode 6 und einer unterseitigen Elektrode 7 derart in ein zweilagig metallisierte Isolierstoffolie eingebracht ist, daß beide Elektroden 6, 7 auf dem Substratkörper 1 mit Hilfselektroden gekoppelt sind. Dazu ist im Beispiel nach Fig. 6a) in einer ersten Ebene oberhalb des Substratkörpers 1 und der Elektrode 6 eine Metallisierungsschicht als erste Hilfselektrode 29 und in einer zweiten Ebene unterhalb des Substratkörpers 1 und der Elektrode 7 eine zweite Metallisierungsschicht als zweite Hilfselektrode 30 vorgesehen. Die erste Hilfselektrode 29 überdeckt in ihrem Randbereich die Elektrode 6 auf dem Substratkörper 1 vollständig, wohingegen entsprechend die zweite Hilfselektrode 30 die Elektrode 7 auf dem Substratkörper 1 vollständig überdeckt. Außerhalb der Überdeckungsbereiche der Hilfselektroden 29, 30 mit den Elektroden 6 bzw. 7 auf dem Substratkörper 1 besteht zwischen den Hilfselektroden 29 und 30 vorzugsweise keine Überdeckung. Dadurch können zwischen den Hilfselektroden 29 und 30 kapazitive Kopplungen mit entsprechend geformten Elektroden 31 bzw. 32 eines Lesegerätes von der Oberseite der Etikettenanordnung her erfolgen, d.h. von der Seite, zu der auf dem Substratkörper 1 die Datenverarbeitungsschaltung angeordnet ist.

Eine gemäß Fig. 6a) ausgebildete Etikettenanordnung ist bevorzugt einsetzbar zum Aufbringen auf nichtmetallischen Gegenständen, wenn eine Vergrößerung des Koppelabstandes zwischen Lesegerät und Etikettenanordnung erwünscht ist.

In Fig. 6b) ist eine Ausbildung einer Etikettenanordnung mit zugehörigem Lesegerät bzw. dessen Elektroden bei konzentrischer Ausbildung der Hilfselektroden und beidseitiger Elektrodenanordnung auf dem Substratkörper 1 dargestellt. Wiederum sind die die Hilfselektroden bildenden Metallisierungen in zwei Ebenen in dem Trägerkörper 17 angeordnet. Mit der Elektrode 6 auf der Oberseite des Substratkörpers 1 ist eine innere, konzentrische Hilfselektrode 29 über das elektrische Feld 15 kapazitiv gekoppelt. Diese koppelt über eine deckungsgleiche Elektrode 31 mit dem Lesegerät. Ein sich zwischen der ersten Hilfselektrode 29 und der Elektrode 31 ausbildendes elektrisches Feld ist mit dem Bezugszeichen 33 bezeichnet.

In der zweiten Ebene der Metallisierung des Trägerkörpers 17 ist eine zweiteilige Hilfselektrode ausgebildet, die eine äußere, im wesentlichen kreisringförmige Elektrodenfläche 34 und eine innere Elektrodenfläche 35 umfaßt. Äußere und innere Elektrodenflächen 34, 35 sind über Verbindungsleiter 36 miteinander verbunden. Die äußere Elektrodenfläche 34 ist konzentrisch zur ersten Hilfselektrode 29 und deckungsgleich zu einer konzentrischen Elektrode 32 des Lesegeräts angeordnet. Im Betrieb koppelt die Elektrode 31 des Lesegeräts mit der ersten Hilfselektrode 29 und die weitere Elektrode 32 des Lesegeräts mit der äußeren Elektrodenfläche 34 der zweiten Hilfselektrode der Etikettenanordnung Diese letztgenannte Kopplung wird über ein elektrisches Feld 37 erhalten. Über das elektrische Feld 25 koppelt die Elektrode 7 auf dem Substratkörper 1 mit der inneren Elektrodenfläche 35 der zweiten Hilfselektrode.

In der Abwandlung nach Fig. 6c) ist gegenüber Fig. 6b) die Kopplung der zweiten Hilfselektrode mit der äußeren Elektrodenfläche 34 über das elektrische Feld 28 mit einem Massepotential vorgenommen, welches entsprechend den Fig. 4 und 5 ausgebildet ist. Die Elektrode 32 des Lesegeräts wird dann durch diese Raummasse ersetzt; die Elektrodenanordnung des Lesegeräts kann dadurch vereinfacht werden.

Der Trägerkörper 17 kann in einer bevorzugten Ausführung aus zwei metallisierten Teilfolien aufgebaut sein, die unter Zwischenfügung des Substratkörpers 1 miteinander verklebt werden können. Eine solche Anordnung ist einfach herstellbar.

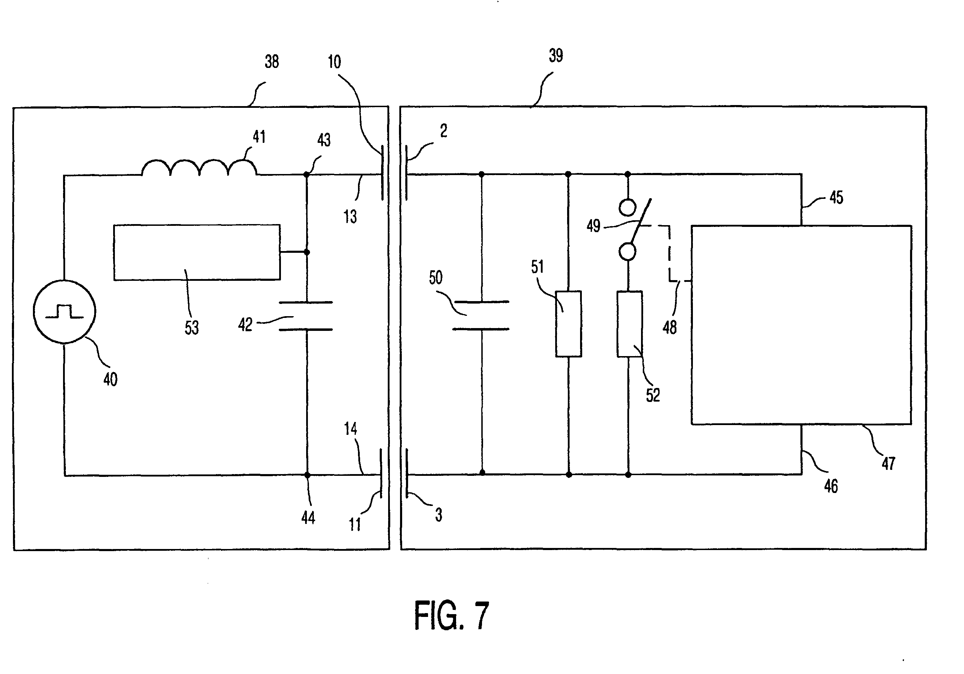

Fig. 7 zeigt ein erstes Ausführungsbeispiel für ein Blockschaltbild des Zusammenwirkens zwischen Lesegerät 38 und Etikettenanordnung 39. Das Lesegerät 38 umfaßt eine Treiberschaltung 40, die eine rechteckförmige Spannung abgibt und einem Reihenresonanzkreis aus einer Spule 41 und einer Kapazität 42 zuführt. An den Anschlüssen 43, 44 der Kapazität 42 kann dann eine durch Resonanzüberhöhung vergrößerte elektrische Spannung abgegriffen und den Elektroden 10, 11 des Lesegerätes 38, die hier als Beispiel gewählt wurden, über die Elektrodenanschlüsse 13 bzw. 14 zugeleitet werden.

Den Elektroden 10 bzw. 11 des Lesegeräts 38 stehen im Betrieb die Elektroden 2 bzw. 3 der Etikettenanordnung 39 gegenüber. Diese sind mit je einem Anschluß 45 bzw. 46 der Datenverarbeitungsschaltung 47 verbunden, die in der Etikettenanordnung 39 enthalten ist. Somit wird elektrische Energie aus dem Reihenresonanzkreis 41, 42 über die Kapazitäten 2, 10 bzw. 3, 11 in die Datenverarbeitungsschaltung 47 eingekoppelt.

Die Datenverarbeitungsschaltung 47 umfaßt Schaltungsmittel zur Energieversorgung der gesamten Etikettenanordnung 39 sowie bevorzugt eine Taktsignalaufbereitung, eine Modulations- und eine Demodulationseinrichtung, eine Steuereinrichtung, einen Speicher und gegebenenfalls eine Verschlüsselungseinrichtung. Diese dienen zum Erzeugen eines Datensignals, welches über eine Leitung 48 eine Schaltereinrichtung 49 steuert. Diese ist vorzugsweise mit elektronischen Schaltungsmitteln ausgeführt. Die Etikettenanordnung 39 umfaßt zwischen den Anschlüssen 45 und 46 der Datenverarbeitungsschaltung 47 weiterhin eine parasitäre Kapazität 50, einen ersten Lastwiderstand 51 sowie eine Reihenschaltung aus der Schaltereinrichtung 49 und einem zweiten Lastwiderstand 52. Durch wahlweises Ein- und Ausschalten der Schaltereinrichtung 49 kann der Wert der Parallelschaltung der beiden Lastwiderstände 51, 52 entsprechend dem Datensignal auf der Leitung 48 moduliert werden.

Aus der über die Anschlüsse 45,46 zugeführten Schwingung wird in der Datenverarbeitungsschaltung 47 einerseits die Versorgungsenergie abgeleitet und andererseits ein Taktsignal aufbereitet. Dabei kann die Frequenz der von der Treiberschaltung 40 abgegebenen Rechteckschwingung unmittelbar als Taktsignal Verwendung finden; jedoch kann dafür auch eine daraus durch Frequenzteilung gewonnene Frequenz herangezogen werden. Das auf das Lesegerät zu übertragende Datensignal wird dann entsprechend einer für die Etikettenanordnung 39 vorgegebenen Weise, die nicht Gegenstand der vorliegenden Beschreibung sein soll, erzeugt und über die Leitung 48 zur Betätigung der Schaltereinrichtung 49 abgegeben. Somit wird im Takt dieses Datensignals die durch die Lastwiderstände 51, 52 gebildete Last des Reihenresonanzkreises 41, 42 moduliert. Die dadurch an den Anschlüssen 43, 44 auftretende Spannungsmodulation wird einem Demodulator 53 im Lesegerät 38 zugeführt und dort ausgewertet. Der Demodulator 53 enthält dazu die benötigten elektronischen Schaltungsmittel.

Zur Übertragung von Datensignalen aus dem Lesegerät 38 auf die Etikettenanordnung 39 kann in der Treiberschaltung 40 die Frequenz oder vorzugsweise die Amplitude des Rechtecksignals moduliert werden. Diese Modulation wird in der Datenverarbeitungsschaltung 47 entsprechend ausgewertet.

Die Datentverarbeitungsschaltung 47 kann eine nichtflüchtige Speichereinrichtung zum dauerhaften Speichern von Daten in der Etikettenanordnung 39 enthalten. Außerdem kann in der Datenverarbeitungsschaltung 47 eine Verschlüsselungseinheit angeordnet sein, um die Datensignale von der Etikettenanordnung 39 zum Lesegerät 38 zu verschlüsseln. Dies ist insbesondere bei Autentifizierungsvorgängen zwischen Lesegerät 38 und Etikettenanordnung 39 bedeutsam.

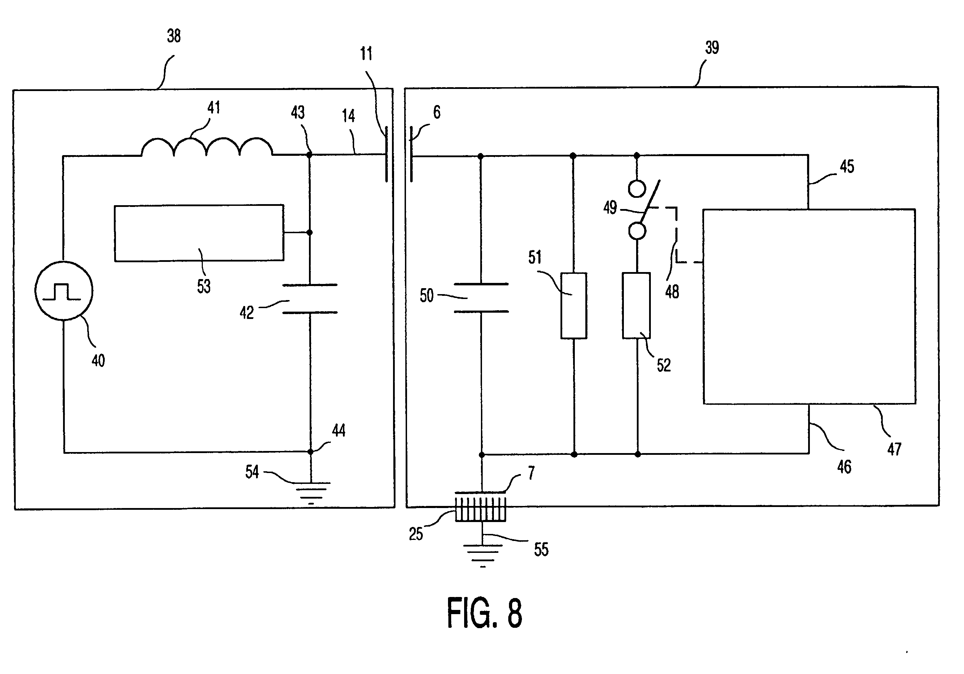

Während in Fig. 7 eine unmittelbare kapazitive Kopplung über zwei Elektrodenpaare 2, 10 bzw. 3, 11 zwischen der Etikettenanordnung 39 und dem Lesegerät 38 dargestellt ist, zeigt Fig. 8 eine Abwandlung einer derartigen Schaltungsanordnung für den Fall, daß nur eine einpolige, unmittelbare kapazitive Kopplung besteht, während die Kopplung des zweiten Poles über die Raummasse erfolgt. Dazu ist die Schaltunganordnung nach Fig. 7 derart abgewandelt, daß sie beispielsweise mit einer Konfiguration gemäß Fig. 4a) einsetzbar ist. Der Anschluß 43 der Kapazität 42 des Reihenresonanzkreises des Lesegeräts ist jetzt über den Elektrodenanschluß 14 mit der Elektrode 11 des Lesegeräts verbunden, die kapazitiv mit der Elektrode 6 auf der Oberseite des Substratkörpers 1 gekoppelt ist. Der andere Anschluß 44 der Kapazität 42 ist an Masse 54 geführt. In der Etikettenanordnung 39 ist die Elektrode 6 mit dem Anschluß 45 der Datenverarbeitungsschaltung 47 verbunden. An den Anschluß 46 der Datenverarbeitungsschaltung 47 ist jetzt die Elektrode 7 auf der Unterseite - von der Datenverarbeitungsschaltung 47 auf dem Substratkörper 1 abgewandten Fläche - verbunden. Diese koppelt - über das elektrische Feld 25 gemäß Fig.4a) - mit der Raummasse 55, d.h. mit allen leitenden Gegenständen der Umgebung des Lesegeräts 38, an die auch deren Masse 54 angeschlossen ist.

Die übrigen Elemente der Fig. 8 entsprechen der Schaltungsanordnung nach Fig. 7.

Die Wahl der optimalen Trägerfrequenz der Treiberschaltung 40 beruht auf unterschiedlichen Parametern. Ein hoher Wert für die Trägerfrequenz erleichtert die Ausbildung der kapazitiven Kopplungen zwischen der Etikettenanordnung 39 und dem Lesegerät 38, da dadurch die Impedanzen der beschriebenen kapazitiven Kopplungen geringer werden. Andererseits gewinnen parasitäre Kapazitäten, insbesondere innerhalb der Etikettenanordnung 39, vorzugsweise der Datenverarbeitungsschaltung 47, eine größere Bedeutung. Da jedoch die erfindungsgemäße Etikettenanordnung 39 mit dem Lesegerät 38 nur auf vergleichsweise geringe Entfernungen koppelt und zusammenarbeitet, bilden gesetzliche Vorschriften zur Beschränkung der Amplitude elektromagnetischer Streufelder - elektromagnetische Verschmutzung - für die Dimensionierung der erfindungsgemäßen Etikettenanordnung keine besondere Bedeutung. Sie bilden somit kaum eine Einschränkung bei der Wahl der optimalen Trägerfrequenz.

Die Taktfrequenz für die Datenverarbeitungsschaltung in der Etikettenanordnung beeinflußt deren Leistungsaufnahme. Abhängig von der räumlichen Entfernung zwischen den korrespondierenden Elektroden des Lesegeräts und der Etikettenanordnung während des Betriebes und abhängig von der gewählten Trägerfrequenz kann letztere selbst als Taktfrequenz gewählt werden. Ist dies nicht optimal, kann aus der Trägerfrequenz durch einfache Frequenzteilung eine niedrigere Taktfrequenz erzeugt werden. Dadurch läßt sich auch die Leistungsaufnahme der Etikettenanordnung senken.

## Patentansprüche

1. System (38, 39, 55) mit einer Etikettenanordnung (39) zum Empfangen, Verarbeiten und/oder Senden von Datensignalen mit einer auf einem im wesentlichen flächigen Substratkörper (1) ausgebildeten, integrierten elektronischen Datenverarbeitungsschaltung (47) und zwei auf dem flächigen Substratkörper (1) der Etikettenanordnung (39) angeordneten Elektroden (2, 3; 4, 5; 6, 7) sowie mit einem Lesegerät (38) mit wenigstens einer zu je einer der Elektroden (2, 3; 4, 5; 6, 7) der Etikettenanordnung (39) korrespondierenden Elektrode (10, 11, 12; 22, 23; 26; 31, 32), wobei im Betrieb die Etikettenanordnung (39) derart in räumliche Korrelation mit dem Lesegerät (38) gebracht wird, daß zwischen wenigstens einer der Elektroden (2, 3; 4, 5; 6, 7) der Etikettenanordnung (39) und der korrespondierenden Elektrode (10, 11, 12; 22, 23; 26; 31, 32) des Lesegeräts (38) durch über eine kapazitive Kopplung mit einem quasi statischen, elektrischen Wechselfeld hervorgerufene Verschiebungsströme ein Austausch von elektrischer Versorgungsenergie und/oder der Datensignale vorgenommen wird,
**dadurch gekennzeichnet,**
**daß** das Lesegerät (38) einen Lesestift mit einem Isolierstoffbleistiftähnlicher Gestalt umfaßt, deren Spitze der Oberfläche des Substratkörpers (1) der Etikettenanordnung (39) angepaßt ist und die wenigstens eine Elektrode trägt, und daß der Lesestift des Lesegeräts (38) und die Etikettenanordnung (39) mit zueinander komplementären, formschlüssigen Ausformungen ausgestaltet sind zum lagegenauen, schnellen Zusammenführen von Lesegerät (38) und Etikettenanordnung (39), wobei der Lesestift des Lesegeräts (38) im Bereich der wenigstens einen Elektrode (10, 11, 12; 22, 23; 26; 31, 32) eine konische Ausformung aufweist, die formschlüssig in eine entsprechende Ausformung eines Gehäuses der Etikettenanordnung (39) greift.

2. System (38, 39, 55) nach Anspruch 1,
**dadurch gekennzeichnet,**
**daß** die zwei auf dem flächigen Substratkörper (1) der Etikettenanordnung (39) angeordneten Elektroden (2, 3) zueinander konzentrisch ausgebildet sind.

3. System (38, 39, 55) nach Anspruch 1,
**dadurch gekennzeichnet,**
**daß** zwischen einer der Elektroden (6) der Etikettenanordnung (39) und der korrespondierenden Elektrode (11) des Lesegeräts (38) einerseits und zwischen der anderen der Elektroden (7) der Etikettenanordnung (39) und Raummasse (55) andererseits durch über eine kapazitive Kopplung mit einem quasi statischen, elektrischen Wechselfeld hervorgerufene Verschiebungsströme ein Austausch von elektrischer Versorgungsenergie und/oder der Datensignale vorgenommen wird.

4. System (38, 39, 55) nach Anspruch 1,
**dadurch gekennzeichnet,**
**daß** das Lesegerät (38) eine elektromagnetische Resonanzanordnung (41, 42) umfaßt und daß Datensignale von der Etikettenanordnung (39) an das Lesegerät (38) durch Belastungsmodulation einer in der Resonanzanordnung (41, 42) des Lesegeräts (38) erzeugten, über das quasi statische elektrische Wechselfeld in die Etikettenanordnung (39) gekoppelten Schwingung übertragen werden.

## Claims

1. A system (38, 39, 55) with a label device (39) for receiving, processing and/or transmitting data signals, with an integrated electronic data-processing circuit (47) formed on an essentially plane substrate body (1) and two electrodes (2, 3; 4, 5; 6, 7) arranged on the plane substrate body (1) of the label device (39), and with a reading apparatus (38) comprising at least one electrode (10, 11, 12; 22, 23; 26; 31, 32) corresponding to at least one respective electrode (2, 3; 4, 5; 6, 7) of the label device (39), in which system, in operation, the label device (39) is brought into a spatial correlation with the reading apparatus (38) such that an exchange of electrical supply power and/or the data signals takes place between at least one of the electrodes (2, 3; 4, 5; 6, 7) of the label device (39) and the corresponding electrode (10, 11, 12; 22, 23; 26; 31, 32) of the reading apparatus (38) by means of offset currents produced by a capacitive coupling with a quasi-static, electric alternating field,
**characterized in that** the reading apparatus (38) comprises a reading pencil with an insulating material in pencil-type shape whose tip is adapted to the surface of the substrate body (1) of the label device (39) and which carries at least one electrode, and **in that** the reading pencil of the reading apparatus (38) and the label device (39) have mutually complementary, interlocking shapes for achieving a positionally accurate and fast joining-together of the reading apparatus (39) and the label device (38), wherein the reading pencil of the reading apparatus (38) has a tapering shape in the region of said at least one electrode (10, 11, 12; 22, 23; 26; 31, 32), which shape matches and interlocks with a corresponding shape of a housing of the label device (39).

2. A system (38, 39, 55) as claimed in claim 1, **characterized in that** the two electrodes (2, 3) arranged on the plane substrate body (1) of the label device (39) are positioned concentrically relative to one another.

3. A system (38, 39, 55) as claimed in claim 1, **characterized in that** an exchange of electrical supply power and/or data signals takes place between one of the electrodes (6) of the label device (39) and the corresponding electrode (11) of the reading apparatus (38) on the one hand and between the other one (7) of the electrodes of the label device (39) and ambient ground (55) on the other hand by means of offset currents generated by a capacitive coupling with a quasi-static alternating electric field.

4. A system (38, 39, 55) as claimed in claim 1, **characterized in that** the reading apparatus (38) comprises an electromagnetic resonant circuit (41, 42), and **in that** data signals are transmitted from the label device (39) to the reading apparatus (38) through load modulation of an oscillation that is generated in the resonant circuit (41, 42) of the reading apparatus (38) and that is coupled into the label device (39) via the quasi-static alternating electric field.

## Revendications

1. Système (38, 39, 55) avec un agencement d'étiquette (39) pour recevoir, traiter et/ou envoyer des signaux de données avec un circuit de traitement de données (47) électroniques intégré, formé sur un corps de substrat (1) sensiblement plat, et deux électrodes (2, 3 ; 4, 5 ; 6, 7) disposées sur le corps de substrat plat (1) de l'agencement d'étiquette (39), ainsi qu'avec un appareil de lecture (38) avec au moins une électrode (10, 11, 12 ; 22, 23 ; 26 ; 31, 32), correspondant respectivement à l'une des électrodes (2, 3 ; 4, 5 ; 6, 7) de l'agencement d'étiquette (39) dans lequel, dans le fonctionnement, l'agencement d'étiquette (39) est amené en corrélation spatiale avec l'appareil de lecture (38), de telle sorte qu'entre au moins l'une des électrodes (2, 3 ; 4, 5 ; 6, 7) du système d'étiquette (39) et l'électrode correspondante (10, 11, 12 ; 22, 23 ; 26 ; 31, 32) de l'appareil de lecture (38), par l'intermédiaire d'un couplage capacitif des courants de décalage provoqués par un champ électrique alternatif quasiment statique, il est procédé à un échange d'énergie d'alimentation électrique et/ou de signaux de données,
**caractérisé en ce que**
l'appareil de lecture (38) comprend une pointe de lecture avec une matière isolante de configuration de type crayon dont la pointe est adaptée à la surface du corps de substrat (1) de l'agencement d'étiquette (39) et porte au moins une électrode, et **en ce que** la pointe de lecture de l'appareil de lecture (38) et l'agencement d'étiquette (39) sont conçus avec des configurations complémentaires entre elles pour un engagement positif en vue d'un assemblage rapide et précis de l'appareil de lecture (38) et de l'agencement d'étiquette (39), de sorte que la pointe de lecture de l'appareil de lecture (38), au niveau de la au moins une électrode (10, 11, 12 ; 22, 23 ; 26 ; 31, 32), présente une configuration conique qui s'adapte par engagement de forme dans une configuration correspondante d'un logement de l'agencement d'étiquette (39).

2. Système (38, 39, 55) selon la revendication 1,
**caractérisé en ce que**
les deux électrodes (2, 3) disposées sur le corps de substrat plat (1) de l'agencement d'étiquette (39) sont conçues de façon concentrique entre elles.

3. Système (38, 39, 55) selon la revendication 1,
**caractérisé en ce que**
entre l'une des électrodes (6) de l'agencement d'étiquette (39) et l'électrode correspondante (11) de l'appareil de lecture (38), d'une part, et entre l'autre des électrodes (7) de l'agencement d'électrode (39) et la masse spatiale (55), d'autre part, par un couplage capacitif avec des courants de décalage provoqués par un champ électrique alternatif quasiment statique, il est réalisé un échange d'énergie d'alimentation électrique et/ou de signaux de données.

4. Système (38, 39, 55) selon la revendication 1,
**caractérisé en ce que**
l'appareil de lecture (38) comprend un agencement de résonance électromagnétique (41, 42), et **en ce que** les signaux de données provenant de l'agencement d'étiquette (39) à destination de l'appareil de lecture (38) produit par modulation de charge dans l'agencement de résonance (41, 42) de l'appareil de lecture (38) sont transmis par le champ électrique alternatif quasiment statique dans l'agencement d'étiquette (39) par la vibration couplée.
